# EUROPÄISCHE PATENTANMELDUNG

(11) **EP 4 718 282 A1**
(43) Veröffentlichungstag der Anmeldung: **01.04.2026**
(21) Anmeldenummer: 24202913.0
(22) Anmeldetag: 26.09.2024
(51) Int. Cl.: G06F 16/9032, G06F 16/957

(54) **KI-GESTÜTZTER CHATBOT FÜR EINE WEBSITE**

(71) Anmelder: Baumann, Gerhard, 70839 Gerlingen (DE); Zeller, Tom, 73733 Esslingen am Neckar (DE)
(72) Erfinder: Baumann, Gerhard, 70839 Gerlingen (DE); Zeller, Tom, 73733 Esslingen am Neckar (DE)
(74) Vertreter: Klunker IP Patentanwälte PartG mbB

(57) **Zusammenfassung**

Die Erfindung betrifft die Interaktion eines Benutzers 1 mit einer Website 2, die dem Benutzer 1 einen Chatbot 4 zur Verfügung stellt. Erfindungsgemäß ist der Chatbot 4 derart mit der Website 2 synchronisiert (S2-S6), dass dem Chatbot 4 Informationen 8 über eine Interaktion des Benutzers 1 mit der Website 2 zugänglich sind. Außerdem ist der Chatbot 4 derart mit der Website 2 synchronisiert, dass der Chatbot 4 abhängig von einem Gesprächskontext 9 mit dem Benutzer Idie Website 2navigiert oder auf der Website 2 Informationen ausgibt oder darstellt.

## Beschreibung

Die vorliegende Erfindung betrifft ein Verfahren zur Unterstützung eines Benutzers bei der Interaktion mit einer Website, die dem Benutzer einen Chatbot zur Verfügung stellt. Die Erfindung betrifft außerdem ein entsprechendes Synchronisationsmodul und einen entsprechenden Server.

Auf vielen Websites sind inzwischen integrierte Chatbots verfügbar, denen Benutzer Fragen im Rahmen der Thematik der Website stellen können. Diese Chatbots sind häufig KI-gestützt, das heißt, eine künstliche Intelligenz generiert im Hintergrund die gewünschten Texte und Antworten. Allerdings sind die Antworten dieser Chatbots in der Regel unbefriedigend, was dazu führt, dass die Benutzererfahrung trotz des Einsatzes eines assistierenden Chatbots mangelhaft ist. Dies liegt im Wesentlichen daran, dass die Antworten der Chatbots als zu abstrakt und zu standardisiert wahrgenommen werden. Sie beschränken sich oft auf wenige vordefinierte Gesprächsszenarien und können trotz Kl-Unterstützung nicht ausreichend auf die individuelle Situation des Benutzers oder dessen Kontext während des Websitebesuchs eingehen. Infolgedessen ist der Benutzer gezwungen, dem Chatbot seine Situation oder den Kontext textuell zu schildern, damit der Chatbot brauchbare Antworten liefern kann. Diese zusätzliche Interaktion lehnen Benutzer in der Regel ab, da sie intuitiv erwarten, dass der Chatbot den Kontext der Situation des Benutzers ähnlich wie ein menschlicher Gesprächspartner erfassen und darauf reagieren kann.

Gelöst wird diese Aufgabe durch ein Verfahren sowie ein Synchronisationsmodul und einen Server gemäß den unabhängigen Ansprüchen. Die davon abhängigen Ansprüche spezifizieren vorteilhafte Ausgestaltungen und Weiterbildungen der Erfindung.

Gemäß einem ersten Aspekt der Erfindung wird ein Verfahren zur Unterstützung eines Benutzers bei seiner Interaktion mit einer Website vorgeschlagen, welches die oben genannten Probleme löst. Erfindungsgemäß wird ein auf der Website verfügbarer Chatbot derart mit der Website synchronisiert, dass dem Chatbot Informationen über eine Interaktion des Benutzers mit der Website zugänglich sind. Der Chatbot hat deshalb nicht nur Zugang zu dem üblichen Kontext eines Gesprächs, sondern erhält zusätzlich Informationen über die Interaktion des Benutzers mit/ auf der Website.

Ersichtlich erfordert die derart charakterisierte Erfindung kein Eingreifen des Benutzers und keine Wechselwirkung mit dem Benutzer, sondern die Erfindung ist ausschließlich durch technisch-deterministische Zusammenhänge definiert.

Diese Synchronisation des Gesprächskontexts mit den Websiteinteraktionen des Benutzers bewirkt, dass der Chatbot nicht mehr isoliert vom restlichen Geschehen auf der Website agieren muss, sondern vorzugsweise in Echtzeit über die Interaktion des Benutzers mit der Website informiert wird und diese als zusätzlichen Kontext in Gespräche mit dem Benutzer einbeziehen kann. Die Interaktionen werden dem Chatbot kontinuierlich übermittelt. Auf diese Weise versteht der Chatbot die aktuelle Situation des Benutzers und kann seine Antworten auf die Interaktionen des Benutzers mit der Website abstimmen.

Im Gegensatz zu herkömmlichen Systemen, bei denen der Chatbot isoliert nur auf Textanfragen reagiert und statisches Wissen nutzt, wird er erfindungsgemäß in die gesamte Benutzerinteraktion vollständig eingebunden. Dem Chatbot ist es deshalb möglich, unmittelbar auf Interaktionen des Benutzers mit der Website zu reagieren, etwa auf eine Produktseite, die der Benutzer gerade studiert, ohne dass dieser Kontext dem Chatbot manuell mitgeteilt werden müsste. Wenn ein Benutzer auf der Website beispielsweise ein Formular ausfüllt oder dort aus anderen Gründen Text eingibt, kann der Chatbot ohne Weiters auf diesen Vorgang eingehen und Hilfestellung bieten.

Die Synchronisation des Chatbots mit den Benutzerinteraktionen ermöglicht eine sofortige und kontextbezogene Reaktion des Chatbots und/ oder der Website. Benutzer erhalten auf diese Weise schneller, einfacher und präziser die Unterstützung, die sie benötigen. Da der Benutzer den Chatbot nicht ausdrücklich über seine Interaktion mit der Website informieren muss, wird die Kommunikation mit dem Chatbot erst sinnvoll und das Benutzererlebnis signifikant verbessert.

Gemäß einer bevorzugten Ausführungsform der Erfindung ergänzt ein mit der Website interagierender Synchronisationsmechanismus einen Gesprächskontext des Chatbots im Wesentlichen in Echtzeit um die Interaktionsinformationen des Benutzers mit der Website.

Der Chatbot bezieht auf dieses Weise kontinuierlich und unmittelbar die aktuellen Interaktionen des Benutzers auf der Website in die Konversation ein. Durch die Bereitstellung der Interaktionsinformation im Gesprächskontext in Echtzeit kann der Chatbot sofort auf die Situation des Benutzers eingehen und relevante Unterstützung bieten. Der Chatbot kann Fragen zu unmittelbar ausgeführten Interaktionen des Benutzers ohne Zeitverzögerung beantworten. Daraus ergibt sich eine bisher nicht mögliche Kontextsensitivität, denn der Chatbot ist stets über die aktuellen Interaktionen des Benutzers informiert und gibt relevante, kontextspezifische Antworten.

Gemäß einer weiteren Ausführungsform sind dem Chatbot infolge der erfindungsgemäßen Synchronisation Interaktionsinformationen betreffend Suchanfragen des Benutzers an die Website, Navigationen des Benutzers auf der Website oder vom Benutzer über die Website eingegebene Informationen zugänglich. Erfindungsgemäß kann der Chatbot also nicht nur auf allgemeine Interaktionen des Benutzers reagieren, sondern auch auf detaillierte Informationen, die durch eine spezifische, interaktive Nutzung der Website generiert oder ausgetauscht werden. Wenn ein Benutzer beispielsweise eine Suchanfrage auf der Website eingibt, bezieht der erfindungsgemäße Chatbot die Suchanfrage in den Kontext der Konversation mit ein, um etwa darauf basierend relevante Informationen oder Unterstützung anzubieten. Ebenso kann der Chatbot Informationen zur Navigation des Benutzers auf der Website nutzen, um die aktuelle Seite oder die besuchten Produkte zu erfassen. Vom Benutzer eingegebene Daten, wie etwa Formulareingaben, werden ebenfalls an den Chatbot weitergeleitet, was eine präzise und gezielte Unterstützung des Benutzers ermöglicht.

Gemäß einer weiteren Ausführungsform wird der Chatbot derart synchronisiert, dass er im Rahmen eines Gesprächskontexts mit dem Benutzer jederzeit auf aktuelle Interaktionsinformationen reagieren kann.

Aufgrund der erfindungsgemäßen kontinuierlichen und unmittelbaren Synchronisation aktualisiert der Chatbot den Gesprächskontext vorzugsweise dynamisch und ohne Verzögerung. Der Chatbot integriert also vorzugsweise fortlaufend relevante Interaktionen in die aktuelle Konversation, ohne dass eine explizite Eingabe des Benutzers erforderlich ist. Durch die permanente Kontextsynchronisation bleibt der Chatbot immer auf dem neuesten Stand der Benutzerinteraktion mit der Website. Dies ermöglicht eine fortlaufend präzise und situationsbezogene Unterstützung des Benutzers.

Gemäß einer weiteren Ausführungsform wird der Chatbot derart mit der Website synchronisiert, dass der Chatbot abhängig von einem Gesprächskontext mit dem Benutzer die Website navigiert oder auf der Website Informationen ausgibt oder darstellt. Der Chatbot kann vorzugsweise auch aktiv die Navigation auf der Website steuern oder Inhalte basierend auf den Interaktionen des Benutzers anzeigen. Der Chatbot kann etwa automatisch durch die Website navigieren oder abhängig von der laufenden Konversation relevante Informationen an geeigneter Stelle auf der Website anzeigen. Der Benutzer muss gemäß dieser Ausführungsform also nicht selbstständig durch die Website navigieren oder nach Informationen suchen, sondern der Chatbot übernimmt diese Aufgabe basierend auf dem aktuellen Gesprächskontext.

Gemäß einer weiteren Ausführungsform basiert der Chatbot auf einem großen Sprachmodell (Large Language Model, LLM), dem die Interaktionsinformationen als Gesprächskontext übergeben werden. Das LLM, etwa ein aktuelles GPT-Modell von Open AI, erhält kontinuierlich die aktuellen Informationen über die Handlungen des Benutzers und nutzt diese Daten, um kontextbezogene und kohärente Antworten zu generieren. Der Einsatz eines LLM verbessert die Qualität und Relevanz der Antworten des Chatbots im Vergleich zu einem statischen Chatbot in Form eines Zustandsautomaten. Das LLM kann auf eine größere Datenbasis zugreifen und somit intelligentere, präzisere und umfassendere menschenähnliche Antworten liefern, die auf den spezifischen Kontext des Benutzers abgestimmt sind.

Gemäß einer weiteren Ausführungsform navigiert das Sprachmodell basierend auf dem erweiterten Gesprächskontext die Website oder es gibt basierend auf dem Gesprächskontext Informationen auf der Website aus oder stellt dort Informationen dar. Das Sprachmodell verwendet demnach vorzugsweise den laufenden Gesprächskontext, um die Navigation auf der Website aktiv zu steuern oder gezielt Informationen auf der Website anzuzeigen. Durch diese nahtlose Integration der Konversation mit dem Benutzer mit der Navigation der Website werden Benutzerinteraktionen angemessen und zeitnah berücksichtigt. In diesem Zusammenhang agiert der Chatbot autonom und kann dem Benutzer deshalb wirkungsvoll bei der Navigation der Website assistieren.

Gemäß einer weiteren Ausführungsform ist die Website mit Annotationen versehen, die dem Chatbot als Interaktionsinformationen zugänglich sind. Der Chatbot reagiert im Rahmen eines Gesprächskontexts auf diese Annotationen. Die in der Website integrierten Annotationen können beispielsweise Hinweise auf bestimmte Bereiche der Website, Produkte oder Aktionen sein, auf die der Chatbot direkt reagieren kann, um dem Benutzer kontextbezogene Informationen oder Unterstützung zu bieten. Die Annotationen erweitern die Informationsbasis des Chatbots, der dadurch gezielter und präziser auf spezifische Abschnitte der Website reagieren kann.

Gemäß einer weiteren Ausführungsform ermittelt der Chatbot mittels Retrieval-Augmented-Generation (RAG) für den Benutzer relevante Informationen zu den Interaktionsinformationen. Es wird also vorzugsweise die Generierung von Texten mit der semantischen Suche nach externen Informationen kombiniert, um eine bessere Antwortqualität zu gewährleisten. Der Einsatz der RAG-Technologie ermöglicht dem Chatbot, genauere und kontextspezifischere Informationen zu liefern. Dies führt zu umfassenderen und präziseren Antworten, die genau auf die spezifischen Bedürfnisse des Benutzers zugeschnitten sind.

Gemäß einer weiteren Ausführungsform integriert der Chatbot die relevanten Informationen in einen Gesprächskontext mit dem Benutzer und/ oder teilt ihm die relevanten Informationen mit und/ oder gibt sie auf der Website aus. Die durch RAG oder andere Mechanismen ermittelten relevanten Informationen werden vorzugsweise entweder in den Gesprächsfluss integriert, direkt an den Benutzer weitergegeben oder auf der Website angezeigt. Die relevanten Informationen werden nicht nur verarbeitet, sondern auch dem Benutzer in einer für ihn leicht zugänglichen Weise zur Verfügung gestellt.

Gemäß einem zweiten Aspekt der Erfindung wird ein Synchronisationsmodul vorgeschlagen, das vorzugsweise als Software auf einem Server ausführbar ist. Das erfindungsgemäße Synchronisationsmodul realisiert das Verfahren gemäß dem ersten Aspekt der Erfindung. Das heißt, das erfindungsgemäße Verfahren wird angewandt, wenn das Synchronisationsmodul auf dem Server ausgeführt wird. Das Synchronisationsmodul ist insofern geeignet eingerichtet, um insbesondere mit einer Website und einem Chatbot derart zu interagieren, dass dem Chatbot Informationen über eine Interaktion eines Benutzers mit der Website zugänglich sind.
1. Gemäß einer bevorzugten Ausführungsform ergänzt das Synchronisationsmodul einen Gesprächskontext des Chatbot im Wesentlichen in Echtzeit um die Interaktionsinformationen. Die Interaktionsinformationen betreffen hierbei etwa Suchanfragen des Benutzers an die Website, Navigationen des Benutzers auf der Website oder vom Benutzer über die Website eingegebene Informationen. Vorzugsweise ist das Synchronisationsmodul auch eingerichtet, den Chatbot derart mit der Website zu synchronisieren, dass der Chatbot abhängig von einem Gesprächskontext mit dem Benutzer die Website navigiert oder auf der Website Informationen ausgibt oder darstellt.

Gemäß weiteren Ausführungsformen des Synchronisationsmoduls ist dieses weiter derart eingerichtet, dass es die Ausführungsformen gemäß dem ersten Aspekt realisiert. Das Synchronisationsmodul ist hierbei vorzugsweise ein Softwaremodul, dass auf einem Server bzw. von dessen Prozessor ausgeführt wird und auf dessen Ressourcen zugreifen kann, um das erfindungsgemäße Verfahren zu realisieren.

Gemäß einem dritten Aspekt der Erfindung wird ein Computer-lesbarer Datenträger bereitgestellt, auf dem das Synchronisationsmodul gemäß dem zweiten Aspekt der Erfindung gespeichert ist.

Gemäß einem vierten Aspekt der Erfindung wird ein Server bereitgestellt, auf dem das Synchronisationsmodul gemäß dem zweiten Aspekt ausführbar installiert ist. Der erfindungsgemäße Server ist eingerichtet, die Website und/oder den Chatbot zu betreiben und/ oder der Server umfasst eine Datenkommunikationsverbindung zu einem Webserver, welcher die Website und/oder den Chatbot betreibt. Insofern betrifft der vierte Aspekt der Erfindung sowohl einen Webserver, der neben der Website und/oder dem Chatbot auch das Synchronisationsmodul betreibt, als auch einen von dem Webserver separaten Backend-Server, der zum Beispiel neben dem Sprachmodell auch das Synchronisationsmodul bereitstellt.

Weitere Vorteile, Merkmale und Einzelheiten der Erfindung ergeben sich aus der nachfolgenden Beschreibung der anliegenden Figuren. Die Figurenbeschreibung ist nicht beschränkend zu verstehen, denn sie erläutert einzelne bevorzugte Ausführungsformen der Erfindung, deren Merkmale untereinander und mit den oben beschriebenen Merkmalen kombinierbar sind. Dabei zeigen:
- Figur 1: ein Flussdiagramm des erfindungsgemäßen Verfahrens; und
- Figur 2: eine schematische Darstellung eines Servers mit dem erfindungsgemäßen Synchronisationsmodul;

Im Folgenden wird die vorliegende Erfindung unter Bezugnahme auf die beigefügten Figuren detailliert erläutert. Die Figuren offenbaren spezifische Ausführungsbeispiele und Varianten der vorliegenden Erfindung. Diese Ausführungsbeispiele und Varianten der Erfindung sind ausreichend detailliert beschrieben, um dem Fachmann die Umsetzung der Erfindung zu ermöglichen. Es versteht sich, dass die verschiedenen Ausführungsformen sich nicht wechselseitig ausschließen, obwohl sie sich voneinander unterscheiden mögen. So kann beispielsweise ein bestimmtes Merkmal oder eine bestimmte Struktur, das/die hier im Zusammenhang mit einer Ausführungsform beschrieben ist, auch in anderen Ausführungsformen umgesetzt werden, ohne dass dies vom Anwendungsbereich der vorliegenden Erfindung abweicht. Ebenso selbstverständlich ist es, dass die Position oder die Anordnung einzelner Merkmale oder Elemente innerhalb einer offenbarten Ausführungsform modifiziert werden kann, ohne vom Anwendungsbereich der vorliegenden Erfindung abzuweichen.

Die nachfolgende detaillierte Figurenbeschreibung ist daher keinesfalls in einem einschränkenden Sinne zu verstehen. Der Umfang der vorliegenden Erfindung wird allein durch die beigefügten Ansprüche definiert im Lichte einer technisch sinnvollen Auslegung und unter Berücksichtigung etwaiger Äquivalente. In den Figuren beziehen sich gleiche Bezugszeichen auf gleiche oder funktional entsprechende Merkmale oder Elemente in verschiedenen Ausführungsformen.

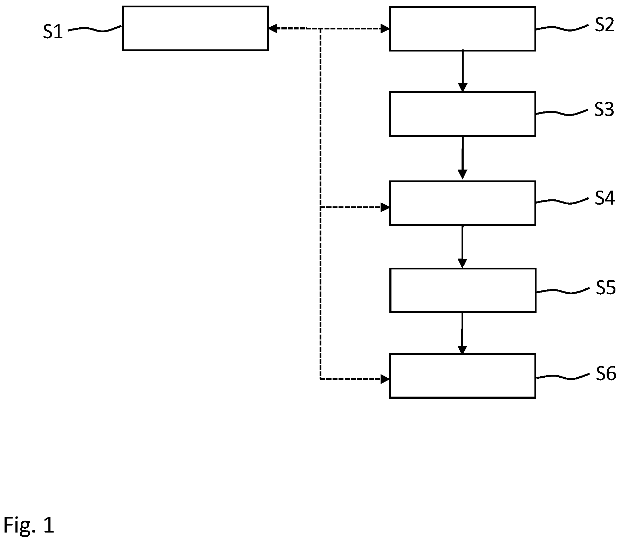

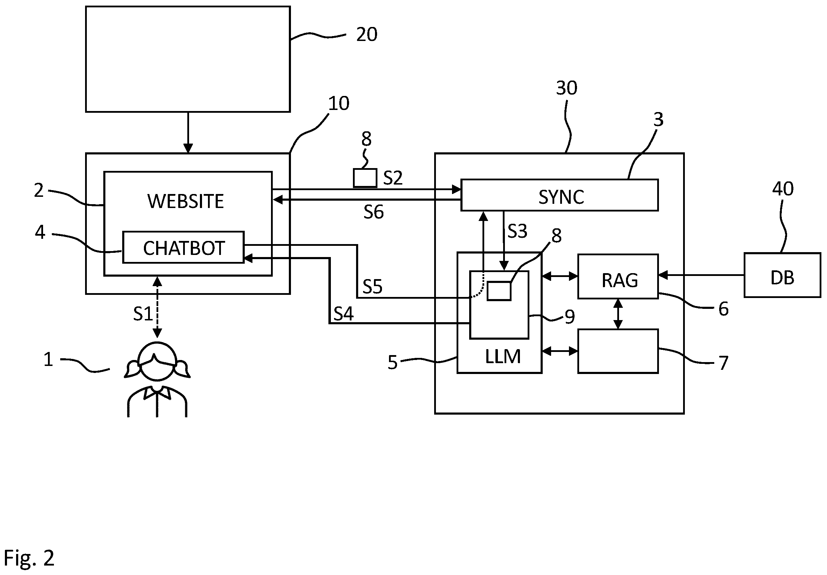

Fig. 1 zeigt ein Flussdiagramm des erfindungsgemäßen Verfahrens zur Unterstützung eines Benutzers 1 bei der Interaktion mit einer Website 2, auf der ein Chatbot 4 für den Benutzer 1 bereitgestellt ist. Das Verfahren umfasst die Schritte S1 bis S6, die nachfolgend mit Bezugnahmen auf die Ausführungsform nach Fig. 2 erläutert werden, in welcher die Verfahrensschritte ebenfalls angegebene sind. Die Interaktionen des Benutzers 1 mit der Website 2 und/oder dem Chatbot 4 sind in Fig. 1 und Fig. 2 strichliniert gezeichnet. Diese Interaktionen des Benutzers 1 mit Chatbot 4 und/oder Website 2 sind jedoch nicht Teil der Erfindung, sondern sie betreffen lediglich die Benutzung der Erfindung durch den Benutzer 1.

In einem Schritt S1 besucht der Benutzer 1 über sein Endgerät 10 die Website 2 und/ oder den Chatbot 4. Das Endgerät 10 ist ein beliebiges, geeignet eingerichtetes Gerät, etwa ein Computer, ein Tablet, ein mobiles Endgerät oder dergleichen. Die Website 2 kann beliebige Inhalte betreffen, an denen der Benutzer 1 interessiert ist, etwa die Produkte eines Online-Shops, Informations- und Medienangebote, die Programmierumgebung eines Software-Entwicklers, eine berufsbedingte Recherchemöglichkeit, Controlling- oder Überwachungsfunktionen und dergleichen. Die Website 2 wird von einem Webserver 20 bereitgestellt und von dem Endgerät 10 des Benutzer 1 angezeigt. Vorzugsweise ist auch der Chatbot 4 auf dem Webserver 20 installiert, er kann aber auch auf einem beliebigen anderen Server installiert sein, beispielsweise einem Backend-Server 30.

Der Benutzer 1 interagiert mit der Website 2, indem er beispielsweise Verknüpfungen folgt (bzw. Hyperlinks de-referenziert), Unterseiten der Website aufruft und navigiert, etwa um Themen per Suchanfragen zu recherchieren, Information abzurufen oder um produktiv zu arbeiten, zu kommunizieren oder dergleichen. Insbesondere kann die Website 2 auch Formulare bereitstellen, die der Benutzer 1 ausfüllen kann, oder sonstige Eingaben von Informationen durch den Benutzer 1 erfordern.

Der Benutzer 1 interagiert parallel auch mit dem auf der Website 2 bereitgestellten Chatbot 4, bei dem er erfindungsgemäß davon ausgeht, dass der Chatbot 4 seine Interaktion mit der Website 2 hilfreich begleitet und sinnvoll unterstützt. Beispielsweise kann der Benutzer 1 dem Chatbot 4 Fragen zu Produkten oder digitalen Inhalten stellen, die er sich auf der Website 2 aktuell ansieht oder er hat an den Chatbot 4 Rückfragen zum Ausfüllen eines Formulars, das er auf der Website 2 vorfindet, oder er fordert beim Chatbot 4 Informationen an, die er auf der Website 2 sucht oder angezeigt haben will. Beispiel für solche Anfragen beim Chatbot 4, die Inhalte der Website 2 betreffen, sind etwa folgende: "Gibt es das Produkt auch in anderen Farben?", "Wie muss ich im Formular meine Mobilnummer angeben?", "Welche Produkte mit kürzeren Lieferzeiten gibt es hier?", oder auch "Bitte zeige mir das Impressum der Website".

Im Rahmen des Verfahren nach Fig. 1 interagiert der Benutzer 1 mit der Website 2 und/oder dem Chatbot 4 in verschiedenen Situationen, insbesondere im Zusammenhang mit den Schritten S2, S4 und S6.

Die weiteren Schritte S2 bis S6 erläutern detailliert die technischen Zusammenhänge der Synchronisation zwischen Website 2 und Chatbot 4, die erfindungsgemäß zweierlei sicherstellen: einerseits ist der Chatbot 4 vollständig über die Interaktionen des Benutzers 1 auf der Website 2 informiert und andererseits wird die Website 4 abhängig vom aktuellen Gesprächskontext des Chatbot 4 aktualisiert.

In einem Schritt S2 erfasst ein Synchronisationsmechanismus die Interaktionen des Benutzers 1 mit der Website 2 in Echtzeit in Form von Interaktionsinformationen 8. Gemäß der Ausführungsform nach Fig. 2 ist der Synchronisationsmechanismus als Synchronisationsmodul 8 (SYNC) realisiert, das in einem Backend-Server 30 als ausführbare Software vorgesehen ist. Selbstverständlich sind auch andere Realisationen des erfindungsgemäßen Synchronisationsmechanismus denkbar, etwa dessen Installation auf dem Webserver 20 oder die Realisierung als Cloud-Service.

Die Interaktionsinformationen 8 werden in einer geeigneten Datenstruktur bzw. in einem geeigneten Format erzeugt und beschreiben vollständig Aktionen, Navigationen und Interaktionen des Benutzers 1 auf/mit der Website 2, wie etwa das Öffnen einer Unterseite, das Eingeben von Suchbegriffen in einem Suchfeld, das Ausfüllen von Formularfeldern, der Download von digitalen Inhalten, das Selektieren von Optionen, Funktionen und Schaltern oder dergleichen.

Das Synchronisationsmodul 3 ist mit einem großen Sprachmodell 5 (Large Language Model; LLM) verbunden, welches vom Benutzer 1 im Chatbot 4 eingegebenen Fragen aufnimmt und geeignet beantwortet. Das Sprachmodell 5 kann prinzipiell ein beliebiges der gängigen Modelle sein, etwa ChatGPT, Claude, Grok, Llama, Mistral oder dergleichen. Es kennt im Rahmen seiner technischen Merkmale den aktuellen Kontext 9 des Gesprächs zwischen Chatbot 4 und Benutzer 1.

In einem Schritt S3 speist das Synchronisationsmodul 3 die Interaktionsinformationen 8 entweder direkt in den Gesprächskontext 9 des Chatbot 4 (bzw. des Sprachmodells 5) ein oder speist nur nach vorgegebenen Kriterien selektierte, relevante Interaktionsinformationen 8 in den Gesprächskontext 9 ein. Die Selektion von relevanten Interaktionsinformationen 8 kann zum Beispiel mittels geeigneter Klassifikatoren erfolgen, die anhand von vordefinierten oder dynamischen Selektionskriterien die Relevanz einzelner Interaktionsinformationen 8 für den Gesprächskontext 9 prüfen. Die relevanten Interaktionsinformationen 8 fügt das Synchronisationsmodul 3 in geeigneter Weise und ggf. an geeigneter Stelle in den vorzugsweise chronologisch geordneten, aktuellen Gesprächskontext 9 des Sprachmodells 5 ein. Dies erfolgt vorzugsweise mittels geeignet aufgebauten "Prompts" an das Sprachmodell 9. Zum Beispiel kann eine Benutzeraktion wie das Öffnen eines Produkts als Textbaustein " *<öffnet Produkt XY>"* in den Gesprächskontext 9 integriert werden.

Gemäß einer bevorzugten Ausführungsform wird die Entscheidung, ob der Chatbot 4 auf eine vom Benutzer 1 vorgenommene Interaktion auf der Website 2 bzw. auf die betreffende Interaktionsinformation 8 reagiert, auf zwei Ebenen getroffen. Einerseits kann die Website 2 mit Interaktionsinformationen 8 in Form von Annotationen versehen werden, die dem Chatbot 4 signalisieren, auf welche Interaktionen er reagieren soll. Diese Annotationen können über HTML-Attribute in die Seite eingebettet werden und sind technologieunabhängig einsetzbar-von statischen HTML-Seiten bis hin zu dynamischen, JavaScript-basierten Anwendungen.

Andererseits kann das Sprachmodell 5 diese Entscheidung basierend auf dem bisherigen Gesprächsverlauf - also dem aktuellen Gesprächskontext 9 - und den aktuellen Interaktionen des Benutzers 1 mit der Website 2 treffen. Das Sprachmodell 5 analysiert, ob eine Reaktion auf die Interaktion angezeigt ist, und berücksichtigt dabei sowohl den Gesprächskontext 9 als auch die Interaktionsinformationen 8. Die Annotationen werden gemäß dieser Ausführungsform von einem im Hintergrund laufenden JavaScript-basierten Skript auf Interaktionen wie Klicks, Hover-Effekte oder Änderungen ihrer Klassen oder Attribute überwacht. Ein Beispiel für solche Annotationen ist das Ausspielen von Support-Informationen bei ungültigen Eingaben:

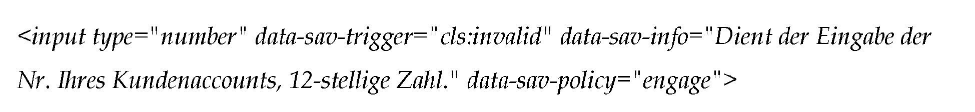

Ein anderes Beispiel einer solche Annotation ist das dynamische Laden von Produktbeschreibungen bei bestimmten Nutzerinteraktionen:

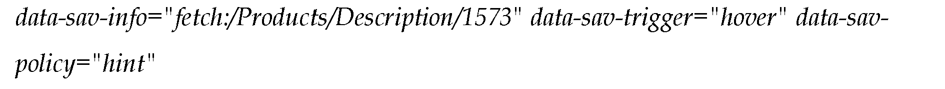

In einem Schritt S4 sind dann die relevanten Interaktionsinformationen 8 über das Sprachmodell 5 unmittelbar im Gesprächskontext 9 des Chatbot 4 zugänglich. Der Chatbot 4 nutzt dann die Interaktionsinformationen 8 im Gespräch mit dem Benutzer 1. Wenn die Interaktionsinformationen 8 beispielsweise das Öffnen einer bestimmte Produktseite der Website 2 durch den Benutzer 1 betreffen, kann der Chatbot 4 (das Sprachmodell 5) nun im Gespräch mit dem Benutzer 1 darauf Bezug nehmen und etwa Hinweise zu dem Produkt geben, ohne dass der Benutzer 1 dem Chatbot 4 ausdrücklich mitteilt, um welches Produkt es sich handelt. Dieser Abschnitt der Interaktion des Benutzers 1 mit der integrierten kombinierten Website/Chatbot-Anordnung 2, 4 wird in Fig. 1 durch den Pfeil zwischen den Schritten S1 und S4 angedeutet.

In einem Schritt S5 stehen die vom Sprachmodell 5 daraufhin generierten kontextbezogenen Antworten des Chatbots 4 für den Benutzer 1 als Teil des aktuellen Gesprächskontexts 9 unmittelbar dem Synchronisationsmodul 3 zu Verfügung und werden von diesem bewertet. Das Synchronisationsmodul 3 entscheidet an dieser Stelle, ob in Reaktion auf den aktualisierten Gesprächskontext 9 in einem Schritt S6 eine Manipulation der Website 2 angezeigt ist, um diese inhaltlich mit dem Gesprächskontext 9 zu synchronisieren, zum Beispiel indem dort Informationen oder Unterseiten der Website 2 angezeigt werden, nach denen der Benutzer 1 fragt oder die dem Benutzer 1 parallel zum Chatverlauf bei der Beantwortung seiner Frage helfen.

Die Manipulation der Website 2 und der dort angezeigten Inhalte gemäß Schritt S6 kann das dynamische Anpassen der Webseitenansicht, die Navigation zu anderen Seiten oder das Ausgeben zusätzlicher Informationen umfassen. Beispielsweise kann das Synchronisationsmodul 3 die Website 2 derart aktualisieren, dass Informationen angezeigt werden, nach denen der Benutzer 1 fragt, etwa Produktinformationen, Bezahlhinweise, rechtliche Hinweise, Verweise auf digitale Medien und Inhalte im Zusammenhang mit einer Benutzerfrage oder dergleichen. Ebenso kann in Schritt S6 ein vorausgefülltes Formular oder das Ergebnis einer Recherche auf der Website 2 angezeigt werden. In der Regel wird der Benutzer 1 darauf reagieren, und eine weitere Interaktion mit der Website 2 und/ oder dem Chatbot 4 vornehmen. Dieser Abschnitt der Interaktion des Benutzers 1 mit der integrierten kombinierten Website/Chatbot-Anordnung 2, 4 wird in Fig. 1 durch den Pfeil zwischen den Schritten S1 und S6 angedeutet.

Insgesamt realisiert das erfindungsgemäße Verfahren die Synchronisation der auf der Website 2 angezeigten Inhalte mit dem Gesprächskontext 9 des Chatbot 4 durch eine wechselseitige Beeinflussung zwischen Website 2 und Chatbot 4, nämlich einerseits die Beeinflussung des Gesprächs des Benutzers 1 mit dem Chatbot 4 durch die Interaktionsinformationen 8 betreffend die Navigation des Benutzers 1 auf der Website 2. Und andererseits die Beeinflussung der auf der Website 2 angezeigten Inhalte durch das Gespräch des Benutzers 1 mit dem Chatbot 4 und den infolgedessen aktualisierten Gesprächskontext 9.

Ein erfindungsgemäßer Dialog zwischen Benutzer 1 und Chatbot 4 könnten etwa so aussehen:

| | |
|---|---|
| *Chatbot:* | *Hallo! Wie kann ich Ihnen helfen?* |
| *Benutzer:* | *Wo finde ich das Impressum?* |
| *Chatbot:* | *Das Impressum finden Sie unter folgendem Link: <....>* |
| *Website:* | *<navigiert zu:* /*Impressum*/*DE>* |
| *Benutzer:* | *Gibt es das auch auf englisch?* |
| *Chatbot:* | *Ja, eine englisch-sprachige Version finden Sie hier: <...>* |
| *Website:* | *<navigiert zu:* /*Impressum*/*EN>* |

Der Benutzer 1 bekommt also nicht nur dem Link zum gewünschten Impressum, sondern die Anweisungen *<navigiert zu:* /*Impressum*/*DE>* und *<navigiert zu:*
/*Impressum*/*DE>* sorgen dafür, dass er das gewünschte Ergebnis sofort angezeigt bekommt.

Dieser beispielhafte Dialog könne erfindungsgemäß wie folgt fortgesetzt werden:

| | |
|---|---|
| *Benutzer:* | *<markiert Text in Element: #impressum-body, text =* " *VAT ID*"> |
| *Chatbot:* | *Haben Sie Schwierigkeiten in diesem Textabschnitt? Zur Erklärung: Eine VAT ID entspricht der Umsatzsteuer-Identifikationsnummer.* |
| *Website:* | *<navigiert zu:* /*Home>* |
| *Chatbot:* | *Kann ich Ihnen sonst noch weiterhelfen?* |

Der Benutzer 1 markiert hier die Zeichenkette "VAT ID" auf der Impressumsseite der Website 2, was über das Synchronisationsmodul 3 als Interaktionsinformation 8 zum Sprachmodell 5 und in den Gesprächskontext 9 des Chatbot 4 gelangt und diesen zu einer Frage und Erläuterung betreffend die markierte Zeichenkette veranlasst. Gleichzeitig wird auf der Website 2 die Home-Seite angezeigt und der Chatbot 4 richtet eine weitere Frage an den Benutzer 1.

Fig. 2 zeigt eine schematische Darstellung einer bevorzugten technischen Anordnung, die das Verfahren nach Fig. 1 umsetzt. Die Hauptkomponenten des Ausführungsform nach Fig. 2 sind der Webserver 20, der auf dem Endgerät 10 des Benutzers 1 eine Website 2 mit integrierten Chatbot 4 anzeigt, der Backend-Server 30 mit dem Synchronisationsmodul 3, dem Sprachmodell 5, einem RAG-Modul 7 ("Retrieval-Augmented Generation") und einem Wissensgraph-Modul 7. Notorisch bekannte Komponenten derartiger Server sind nicht dargestellt, etwas Prozessoren, Speicher, Hardware-Schnittstellen und dergleichen. Ferner zeigt Fig. 2 noch eine separate Datenbank 40 (DB), aus der das RAG-Modul Kontextwissen entnimmt.

Die erfindungsgemäße Wechselwirkung der angesprochenen Komponenten wurde bereits im Zusammenhang mit der Fig. 1 weitgehend erläutert. Ergänzend werden nachfolgend noch einige weitere Aspekte beschrieben, die im Zusammenhang mit der Erfindung von Bedeutung sind.

Gemäß Fig. 2 wird ein RAG-Modul 6 in Kombination mit einem Wissensgraphen 7 eingesetzt, um die Qualität und Präzision der vom Chatbot 4 erzeugten Antworten zu optimieren. Dazu extrahiert das RAG-Modul 6 relevante Informationen aus externen Datenquellen, beispielsweise aus der Datenbank 40, und ergänzt den Gesprächskontext 9 entsprechend.

Die Einbindung des Wissensgraphen 7 erlaubt es zusätzlich, relevante Informationen auch dann effizient zu finden und zu aggregieren, wenn diese über verschiedene Dokumente, Datenquellen oder Datenbanken verteilt sind. Der Wissensgraph 7 stellt dazu ein Netzwerk aus semantisch verknüpften Knoten bereit, die Entitäten, Konzepte oder Ereignisse repräsentieren. Über eine initiale semantische Ähnlichkeitssuche identifiziert das RAG-Modul 6 relevante Einstiegsknoten im Wissensgraphen 7, die thematisch zur zum aktuellen Gesprächskontext 9 passen. Im Kern werden dann im angereicherten Wissensgraph 7 jene Knoten und die Information, die sie repräsentieren, priorisiert, die aufgrund ihrer Nähe oder Beziehung zu den Einstiegsknoten besonders relevant sind. Durch die Kombination von RAG-Technik und Wissensgraphen kann das Sprachmodell 5 besser relevante Informationen identifizieren und irrelevante Informationen ausschließen und dadurch die Qualität der Antworten des Chatbot 4 verbessern.

In der vorstehenden Beschreibung ist die Erfindung unter Bezugnahme auf bestimmte Ausführungsformen beschrieben worden. Es wird jedoch deutlich, dass verschiedene Modifikationen und Änderungen daran vorgenommen werden können, ohne dass der breitere Rahmen der Erfindung verlassen wird. Die oben beschriebenen Prozessabläufe werden beispielsweise unter Bezugnahme auf eine bestimmte Reihenfolge der Prozesshandlungen beschrieben. Die Reihenfolge vieler der beschriebenen Verfahrensschritte kann jedoch geändert werden, ohne den Anwendungsbereich oder die Funktionsweise der Erfindung zu beeinträchtigen. Die Beschreibung und die Zeichnungen sind dementsprechend eher illustrativ als einschränkend zu verstehen.

## Patentansprüche

1. Verfahren zur Unterstützung eines Benutzers (1) bei der Interaktion mit einer Website (2), die dem Benutzer (1) einen Chatbot (4) zur Verfügung stellt, **dadurch gekennzeichnet, dass** der Chatbot (4) derart mit der Website (2) synchronisiert wird (S2-S6), dass dem Chatbot (4) Informationen (8) über eine Interaktion des Benutzers (1) mit der Website (2) zugänglich sind (S1).

2. Verfahren nach Anspruch 1, **dadurch gekennzeichnet, dass** ein mit der Website (2) interagierender Synchronisationsmechanismus (3) einen Gesprächskontext (9) des Chatbot (4) im Wesentlichen in Echtzeit um die Interaktionsinformationen (8) ergänzt.

3. Verfahren nach Anspruch 1 oder 2, **dadurch gekennzeichnet, dass** dem Chatbot (2) Interaktionsinformationen (8) betreffend Suchanfragen des Benutzers (1) an die Website (2), Navigationen des Benutzers (1) auf der Website (2) oder vom Benutzer (1) über die Website (2) eingegebene Informationen zugänglich gemacht werden (S3, S4).

4. Verfahren nach einem der Ansprüche 1 bis 3, **dadurch gekennzeichnet, dass** der Chatbot (2) derart synchronisiert wird (S2-S6), dass er im Rahmen eines Gesprächskontexts (9) mit dem Benutzer (1) jederzeit auf aktuelle Interaktionsinformationen (8) reagieren kann (S4).

5. Verfahren nach einem der Ansprüche 1 bis 4, **dadurch gekennzeichnet, dass** der Chatbot (4) ferner derart mit der Website (2) synchronisiert wird, dass der Chatbot (4) abhängig von einem Gesprächskontext (9) mit dem Benutzer (1) die Website (2) navigiert oder auf der Website (2) Informationen ausgibt oder darstellt (S6).

6. Verfahren nach einem der Ansprüche 1 bis 5, **dadurch gekennzeichnet, dass** der Chatbot (4) auf einem großen Sprachmodell, LLM, (5) basiert, dem die Interaktionsinformationen (8) zugängliche gemacht werden, indem sie in einen Gesprächskontext (9) integriert werden (S3).

7. Verfahren nach Anspruch 6, **dadurch gekennzeichnet, dass** das Sprachmodell (5) basierend auf dem übergebenen Gesprächskontext (9) die Website (2) navigiert oder auf der Website (2) Informationen ausgibt oder darstellt (S6).

8. Verfahren nach einem der Ansprüche 1 bis 7, **dadurch gekennzeichnet, dass** die Website (2) mit Annotationen versehen ist, die dem Chatbot (4) als Interaktionsinformationen (9) zugänglich sind, wobei der Chatbot (4) im Rahmen eines Gesprächskontexts (9) mit dem Benutzer (1) auf die Annotationen reagiert.

9. Verfahren nach einem der Ansprüche 1 bis 8, **dadurch gekennzeichnet, dass** der Chatbot (4) mittels Retrieval-Augmented-Generation, RAG, für den Benutzer (1) relevante Informationen zu den Interaktionsinformationen (8) ermittelt.

10. Verfahren nach Anspruch 9, **dadurch gekennzeichnet, dass** der Chatbot (4) die relevanten Informationen in einen Gesprächskontext (9) mit dem Benutzer (1) integriert und/oder dem Benutzer (1) mitteilt und/oder auf der Website (2) ausgibt oder darstellt (S6).

11. Synchronisationsmodul (3), das als Software auf einem Server (30) ausführbar ist, **dadurch gekennzeichnet, dass** das Synchronisationsmodul (3) eingerichtet ist, mit einer Website (2) und einem Chatbot (4) derart zu interagieren, dass dem Chatbot (4) Informationen (8) über eine Interaktion eines Benutzers (1) mit der Website (2) zugänglich sind.

12. Synchronisationsmodul (3) nach Anspruch 11, **dadurch gekennzeichnet, dass** das Synchronisationsmodul (3) einen Gesprächskontext (9) des Chatbot (4) im Wesentlichen in Echtzeit um Interaktionsinformationen (8) ergänzt, wobei die Interaktionsinformationen (8) betreffend Suchanfragen des Benutzers (1) an die Website (2), Navigationen des Benutzers (1) auf der Website (2) oder vom Benutzer (1) über die Website (2) eingegebene Informationen betreffen können.

13. Synchronisationsmodul (3) nach Anspruch 11 oder 12, **dadurch gekennzeichnet, dass** das Synchronisationsmodul (3) eingerichtet ist, ein Verfahren nach einem der Ansprüche 1 bis 10 ausführen.

14. Computer-lesbarer Datenträger mit einem darauf in Form einer Software abgespeicherten Synchronisationsmodul (3) nach eine der Ansprüche 11 bis 13.

15. Server (30) mit einem darauf ausführbaren Synchronisationsmodul (3) nach einem der Ansprüche 11 bis 13, wobei der Server (30)
eingerichtet ist, die Website (2) und/oder den Chatbot (4) zu betreiben und/ oder
eine Datenkommunikationsverbindung zu einem Webserver (20) umfasst, welcher die Website (2) und/oder den Chatbot (4) betreibt.

## Geänderte Patentansprüche

### Geänderte Patentansprüche gemäss Regel 137(2) EPÜ.

1. Verfahren zur Unterstützung eines Benutzers (1) bei der Interaktion mit einer Website (2), die dem Benutzer (1) einen Chatbot (4) zur Verfügung stellt, **dadurch gekennzeichnet, dass** der Chatbot (4) derart mit der Website (2) synchronisiert wird (S2-S6), dass dem Chatbot (4) Informationen (8) über eine Interaktion des Benutzers (1) mit der Website (2) zugänglich sind (S1) und der Chatbot (4) abhängig von einem Gesprächskontext (9) mit dem Benutzer (1) die Website (2) navigiert oder auf der Website (2) Informationen ausgibt.

2. Verfahren nach Anspruch 1, **dadurch gekennzeichnet, dass** ein mit der Website (2) interagierender Synchronisationsmechanismus (3) einen Gesprächskontext (9) des Chatbot (4) im Wesentlichen in Echtzeit um die Interaktionsinformationen (8) ergänzt.

3. Verfahren nach Anspruch 1 oder 2, **dadurch gekennzeichnet, dass** dem Chatbot (2) Interaktionsinformationen (8) betreffend Suchanfragen des Benutzers (1) an die Website (2), Navigationen des Benutzers (1) auf der Website (2) oder vom Benutzer (1) über die Website (2) eingegebene Informationen zugänglich gemacht werden (S3, S4).

4. Verfahren nach einem der Ansprüche 1 bis 3, **dadurch gekennzeichnet, dass** der Chatbot (2) derart synchronisiert wird (S2-S6), dass er im Rahmen eines Gesprächskontexts (9) mit dem Benutzer (1) jederzeit auf aktuelle Interaktionsinformationen (8) reagieren kann (S4).

5. Verfahren nach einem der Ansprüche 1 bis 4, **dadurch gekennzeichnet, dass** der Chatbot (4) auf einem großen Sprachmodell, LLM, (5) basiert, dem die Interaktionsinformationen (8) zugängliche gemacht werden, indem sie in einen Gesprächskontext (9) integriert werden (S3).

6. Verfahren nach Anspruch 5, **dadurch gekennzeichnet, dass** das Sprachmodell (5) basierend auf dem übergebenen Gesprächskontext (9) die Website (2) navigiert oder auf der Website (2) Informationen ausgibt oder darstellt (S6).

7. Verfahren nach einem der Ansprüche 1 bis 6, **dadurch gekennzeichnet, dass** die Website (2) mit Annotationen versehen ist, die dem Chatbot (4) als Interaktionsinformationen (9) zugänglich sind, wobei der Chatbot (4) im Rahmen eines Gesprächskontexts (9) mit dem Benutzer (1) auf die Annotationen reagiert.

8. Verfahren nach einem der Ansprüche 1 bis 7, **dadurch gekennzeichnet, dass** der Chatbot (4) mittels Retrieval-Augmented-Generation, RAG, für den Benutzer (1) relevante Informationen zu den Interaktionsinformationen (8) ermittelt.

9. Verfahren nach Anspruch 8, **dadurch gekennzeichnet, dass** der Chatbot (4) die relevanten Informationen in einen Gesprächskontext (9) mit dem Benutzer (1) integriert und/oder dem Benutzer (1) mitteilt und/oder auf der Website (2) ausgibt oder darstellt (S6).

10. Synchronisationsmodul (3), das als Software auf einem Server (30) ausführbar ist, **dadurch gekennzeichnet, dass** das Synchronisationsmodul (3) eingerichtet ist, mit einer Website (2) und einem Chatbot (4) derart zu interagieren, dass dem Chatbot (4) Informationen (8) über eine Interaktion eines Benutzers (1) mit der Website (2) zugänglich sind und der Chatbot (4) abhängig von einem Gesprächskontext (9) mit dem Benutzer (1) die Website (2) navigieren oder auf der Website (2) Informationen ausgeben kann.

11. Synchronisationsmodul (3) nach Anspruch 10, **dadurch gekennzeichnet, dass** das Synchronisationsmodul (3) einen Gesprächskontext (9) des Chatbot (4) im Wesentlichen in Echtzeit um Interaktionsinformationen (8) ergänzt, wobei die Interaktionsinformationen (8) betreffend Suchanfragen des Benutzers (1) an die Website (2), Navigationen des Benutzers (1) auf der Website (2) oder vom Benutzer (1) über die Website (2) eingegebene Informationen betreffen können.

12. Synchronisationsmodul (3) nach Anspruch 10 oder 11, **dadurch gekennzeichnet, dass** das Synchronisationsmodul (3) eingerichtet ist, ein Verfahren nach einem der Ansprüche 1 bis 9 ausführen.

13. Computer-lesbarer Datenträger mit einem darauf in Form einer Software abgespeicherten Synchronisationsmodul (3) nach eine der Ansprüche 10 bis 12.

14. Server (30) mit einem darauf ausführbaren Synchronisationsmodul (3) nach einem der Ansprüche 10 bis 12, wobei der Server (30)
eingerichtet ist, die Website (2) und/oder den Chatbot (4) zu betreiben und/oder
eine Datenkommunikationsverbindung zu einem Webserver (20) umfasst, welcher die Website (2) und/oder den Chatbot (4) betreibt.
